# EUROPÄISCHE PATENTSCHRIFT

(11) **EP 3 036 460 B1**
(45) Veröffentlichungstag und Bekanntmachung des Hinweises auf die Patenterteilung: **27.09.2017**
(21) Anmeldenummer: 14738774.0
(22) Anmeldetag: 01.07.2014
(51) Int. Cl.: F16J 9/06, F16J 9/20

(54) **ÖLABSTREIFRING**
PISTON RING
SEGMENT DE PISTON

(30) Priorität: 21.08.2013 DE 102013216515
(43) Veröffentlichungstag der Anmeldung: 29.06.2016
(73) Patentinhaber: Federal-Mogul Burscheid GmbH, 51399 Burscheid (DE)
(72) Erfinder: VON EYNERN, Desiree, 51379 Leverkusen (DE)
(74) Vertreter: Becker Kurig Straus
(86) Internationale Anmeldenummer: PCT/EP2014/063934
(87) Internationale Veröffentlichungsnummer: WO 2015/024693

(56) Entgegenhaltungen:
- EP-A1- 0 366 983
- FR-A- 487 152
- FR-A5- 2 247 126
- GB-A- 2 203 514
- JP-A- 2003 286 899
- US-A- 1 298 548
- US-A- 2 420 690
- US-A- 4 128 250

## Beschreibung

Die vorliegende Erfindung betrifft einen Ölabstreifring für Kolbenmaschinen, insbesondere für Verbrennungsmotoren.

Es sind seit der Erfindung des Verbrennungsmotors viele verschiedene Kolbenringe und insbesondere Ölabstreifringe bekannt.

Herkömmliche Ölabstreifringe sind beispielsweise aus der Japanischen Patentanmeldung JP 2003 286899 A bekannt. Die JP 2003 286899 A offenbart einen Kombinations-Ölabstreifring, der einen Ölabstreifring mit einem annähernd I-förmigen Querschnitt mit Schienen und eine Expander-Feder umfasst. Ölrücklauflöcher sind in der unteren Schiene gebildet und durchdringen diese in Axialrichtung.

Die vorliegende Erfindung ist bestrebt, das Öl-Abstreifverhalten eines Ölabstreifrings zu verbessern.

Dies wird erreicht durch einen Ölabstreifring mit den Merkmalen des unabhängigen Anspruchs 1. Bevorzugte Ausführungsformen sind in den abhängigen Ansprüchen beschrieben.

Die Aufgabe wird durch einen Ölabstreifring mit mindestens einem Steg bzw. Laufsteg bzw. Abstreifsteg mit jeweils einer Lauffläche und mit radialen Öl-Kanälen in dem Ölabstreifring gelöst. Die radialen Öl-Kanäle schneiden mindestens eine Kante mindestens eines Steges und dessen Lauffläche und bilden so Aussparungen an einem Rand der Lauffläche. Damit ist mindestens eine Kante einer Lauffläche durch Aussparungen begrenzt. Die Ölkanäle erstrecken sich von der Lauffläche im Wesentlichen radial zu dem Ölabstreifring. Die Öl-Kanäle sollen die Abstreifkante des Stegs verlängern. Die Öl-Kanäle können abgestreiftes Öl von der Abstreifkanten nach innen befördern. Die Öl-Kanäle können, wenn sie als Durchgangslöcher ausgeführt sind, abgestreiftes Öl nach hinten in die Ölabstreifring-Nut befördern. Durch die Aussparungen wird die Länge des Randes der Lauffläche an dem Abstreifsteg vergrößert, wodurch eine bessere Öl-Abstreifwirkung erwartet wird. Die Aussparungen verringern jedoch auch die Breite der Lauffläche des Ölabstreifrings.

In einer ersten beispielhaften Ausführungsform des Ölabstreifrings bilden die Öl-Kanäle Sacklöcher. Die Sacklöcher erstrecken sich dabei nicht bis hinter den Kolbenring. Die Sacklöcher können nur so viel Öl aufnehmen, wie ihrem Volumen entspricht, sie können das Öl jedoch von der Abstreifkante weg befördern.

In einer beispielhaften Ausführungsform des Ölabstreifrings bilden die Öl-Kanäle Durchgangslöcher. Die Durchgangslöcher erstrecken sich dabei bis hinter den Kolbenring.

In einer weiteren beispielhaften Ausführungsform des Ölabstreifrings bildet die Lauffläche eine Zylinderfläche, und die Aussparungen, die Sacklöcher oder die Durchgangslöcher verlaufen senkrecht zu einer Zylinderachse der Zylinderfläche. Die Durchgangslöcher oder die Sacklöcher bzw. die Achsen der Durchgangs-/Sacklöcher liegen dabei in einer Ebene.

In einer zusätzlichen beispielhaften Ausführungsform des Ölabstreifrings bildet die Lauffläche ebenfalls eine Zylinderfläche, wobei die Aussparungen, die Sack- oder Durchgangslöcher in einem Winkel zwischen 2° und 40°, bevorzugt zwischen 5° und 30°, und weiter bevorzugt zwischen 7° und 15°, zu der Zylinderachse geneigt sind. In dieser Ausführungsform liegen die Sack- oder Durchgangslöcher bzw. die Achsen der Sack- oder Durchgangslöcher auf einer Kegelfläche.

Gemäß einer weiteren Ausführungsform des Ölabstreifrings weisen die Öl-Kanäle oder die Sacklöcher einen zumindest teilweise kreisförmigen Querschnitt bzw. die Durchgangslöcher einen kreisförmigen Querschnitt auf. Durch den kreisförmigen Querschnitt bildet der Rand der Aussparungen bzw. der Sack- bzw. Durchgangslöcher an der mindestens einen Kante der Lauffläche im Wesentlichen Kreisbögen oder Ellipsenbögen. Die Ellipsenbögen entstehen, wenn eine Lauffläche kegelförmig ist oder wenn die Achsen der Sack- bzw. Durchgangslöcher auf einer Kegelfläche liegen oder wenn die Außenfläche des Ölabstreifrings abgewickelt wird.

In einer weiteren beispielhaften Ausführungsform des Ölabstreifrings weist dieser in einer Axialrichtung eine Höhe auf, die größer ist als eine Breite der Lauffläche an einer Stelle, an der die Lauffläche keine Aussparung aufweist. Diese Ausführung betrifft einen Ölabstreifring, der lediglich eine schmale Lauffläche aufweist, deren Erstreckung in der Axialrichtung kleiner ist als die Dicke des Ölabstreifrings. Im Gegensatz zu den vorstehenden Kolbenringen, die als Teil eines dreiteiligen Ölabstreifrings verwendet werden können, kann diese Ausführungsform als einteiliger oder zweiteiliger Ölabstreifring mit oder ohne Innenfeder verwendet werden. Es ist beispielsweise vorgesehen, einen ein- oder zweiteiligen Ölabstreifring mit nur einem Abstreifsteg einzusetzen.

Bevorzugt ist die Lauffläche des Ölabstreifrings im Wesentlichen in einer Mitte der Höhe des Ölabstreifrings angeordnet. Diese Ausführung kann als ein- oder zweiteiliger Ölabstreifring mit nur einem Abstreifsteg ausgeführt sein. Diese Ausführung eignet sich besonders für doppelt wirkende Kolben.

Weiter bevorzugt ist die Lauffläche des Ölabstreifrings im Wesentlichen in einer unteren Hälfte der Höhe des Ölabstreifrings angeordnet. Diese Ausführung kann als ein- oder zweiteiliger Ölabstreifring mit nur einem Abstreifsteg ausgeführt sein. Diese Ausführung eignet sich besonders für einfach wirkende Kolben, wie sie bei Verbrennungsmotoren üblich sind.

In einer beispielhaften Ausführungsform des Ölabstreifrings sind die Aussparungen nur an einer unteren Kante der Lauffläche angeordnet. In dieser Ausführung kann das Öl an einer Zylinderwand besonders effektiv bei einer Abwärtsbewegung abgestreift und abtransportiert werden.

In einer weiteren beispielhaften Ausführungsform der vorliegenden Erfindung sind die Aussparungen sowohl an einer oberen Kante als auch an einer unteren Kante der Lauffläche angeordnet. Diese Ausführungsform eignet sich für Kolbenringe mit mehreren Abstreifstegen. Es ist ebenfalls vorgesehen, drei oder mehrere Abstreifstege an dem Ölabstreifring anzuordnen.

In einer beispielhaften Ausführungsform des Ölabstreifrings sind die Aussparungen an der oberen Kante der Lauffläche gegenüber den Aussparungen an der unteren Kante der Lauffläche versetzt zueinander angeordnet. Dadurch bildet die Lauffläche eine Art Zickzackmuster. In dieser Ausführung kann die Gesamtbreite der Lauffläche über den Ring gleichmäßiger gehalten werden.

In einer zusätzlichen Ausführungsform des Ölabstreifrings weist dieser mindestens eine erste und eine zweite Lauffläche auf, die voneinander getrennt um den Ölabstreifring verlaufen, wobei mindestens die erste Lauffläche mit den Aussparungen versehen ist. Die erste Lauffläche kann dabei die untere Lauffläche sein. Wenn die erste Lauffläche eine untere Lauffläche ist, kann Öl, das sich an dem ersten Laufsteg sammelt, hinter den Ölabstreifring abgeführt werden. Es kann dabei zwischen den Ringen eine Reihe von Öl-Kanälen angeordnet sein, wie sie aus bisherigen Ölabstreifringen bekannt ist. Die erste Lauffläche kann dabei die obere Lauffläche sein.

In einer weiteren Ausführungsform der vorliegenden Erfindung umfasst der Ölabstreifring mindestens eine erste und eine zweite Lauffläche, die voneinander getrennt um den Ölabstreifring verlaufen, wobei sowohl die erste als auch die zweite Lauffläche mit den Aussparungen versehen ist. In dieser Ausführungsform können die positiven Effekte der Aussparungen an beiden Abstreifkanten bzw. Laufstegen genutzt werden.

Es ist vorgesehen, eine erste untere Lauffläche, mit Sacklöchern zu versehen, während eine zweite obere Lauffläche mit Durchgangslöchern versehen wird, die jeweils voneinander getrennt um den Ölabstreifring angeordnet sind. Dabei sind sowohl die erste als auch die zweite Lauffläche mit den Aussparungen versehen. In dieser Ausführungsform können die positiven Effekte der Aussparungen an beiden Abstreifkanten bzw. Laufstegen genutzt werden. In dieser Ausführungsform wird nur das zwischen den Stegen bzw. den Laufflächen abgestreifte Öl durch die Durchgangslöcher hinter den Ölabstreifring transportiert. Das von dem ersten unteren Steg bzw. der ersten unteren Lauffläche abgestreifte Öl wird vor dem Steg hergeschoben und kann von den Kanälen lediglich von der Abstreifkante weg transportiert werden.

In einer anderen beispielhaften Ausführungsform des Ölabstreifrings sind die Aussparungen, die Sack- oder Durchgangslöcher der ersten Lauffläche gegenüber den entsprechenden Aussparungen, den Sack- oder Durchgangslöcher der zweiten Lauffläche versetzt. Sollten die Aussparungen oder Durchgangslöcher bzw. die Sacklöcher der unteren Lauffläche bzw. Abstreifkante eine in Umfangsrichtung ungleichmäßige Öl-Verteilung bewirken, kann dies durch eine entsprechende komplementäre Struktur der oberen Lauffläche bzw. Abstreifkante ausgeglichen werden.

In einer zusätzlichen beispielhaften Ausführungsform des Ölabstreifrings weisen die Durchgangslöcher einen Knick auf. Indem ein Durchgangsloch von zwei Seiten aus gebohrt wird, kann ein Durchgangsloch mit einem Knick hergestellt werden. Bei einer solchen Ausführungsform kann die Position des Ölaustritts an einer Flanke oder einer hinteren Fläche des Ölabstreifrings beliebig gewählt werden.

In einer weiteren beispielhaften Ausführungsform des Ölabstreifrings ist die Kante der Lauffläche zwischen den Aussparungen abgerundet. Durch eine abgerundete Form kann verhindert werden, dass ein sich twistender Ring zu Riefen in einer Zylinderoberfläche führen kann. Die Bildung von Riefen wird verhindert, da es in dieser Ausführungsform keine scharfen Ecken gibt, die sich in eine Zylinderoberfläche eingraben können. In einer anderen beispielhaften Ausführungsform des Ölabstreifrings verläuft die Kante der Lauffläche zwischen den Aussparungen schräg, d. h. sie liegt nicht in einer Ebene, die senkrecht zu einer Zylinderachse verläuft. In dieser Ausführungsform kann die Kante zwischen den Aussparungen wie ein schräges Räumschild arbeiten, das Öl in die nächste Aussparung schiebt. Wenn alle Kanten der Lauffläche zwischen den Aussparungen eine gleiche Schräge aufweisen, kann damit eventuell eine Rotation des Ölabstreifrings in der Ölabstreifring-Nut begünstigt werden. In einer zusätzlichen beispielhaften Ausführungsform des Ölabstreifrings bildet die Kante der Lauffläche zwischen den Aussparungen jeweils einen Bug, ähnlich einem Schiffsbug. Ist die Kante der Lauffläche zwischen den Aussparungen jeweils wie ein Schiffsbug geformt, kann ein Ölfilm wie eine Bugwelle seitlich in Richtung der Aussparungen verschoben werden. Durch eine bugförmige Ausführung wird die Länge des Randes der Lauffläche auch zwischen den Aussparungen erhöht, was die Abstreifleistung weiter erhöht. Die vorstehenden Gestaltungen der Kante der Lauffläche zwischen den Aussparungen lassen sich insbesondere mit Ausführungsformen kombinieren, bei denen die Durchgangslöcher (im Wesentlichen) auf einer Kegelfläche liegen. Ein spitzer Abstreifwinkel kann die höhere Ölmenge leichter abtransportieren, die aus dem Bereich der Kante der Lauffläche zwischen den Aussparungen stammt.

Im Folgenden wird die vorliegende Erfindung anhand von schematischen Figuren näher verdeutlicht:
Figur 1 zeigt eine schematische Seitenansicht und einen Querschnitt durch einen herkömmlichen Ölabstreifring mit zwei Laufstegen, zwischen denen Löcher angeordnet sind.
Figur 2 zeigt eine schematische Seitenansicht und einen Querschnitt durch einen herkömmlichen Ölabstreifring mit nur einem Laufsteg, der an seiner unteren Seite mit Durchgangslöchern versehen ist.
Figuren 3 und 4 zeigen schematische Seitenansichten und Querschnitte durch erfindungsgemäße Ölabstreifringe mit jeweils nur einem Laufsteg, die an seiner unteren Seite mit Durchgangslöchern versehen sind.
Figuren 5 bis 9 zeigen schematische Seitenansichten und Querschnitte durch erfindungsgemäße Ölabstreifringe mit jeweils zwei Laufstegen.
Figuren 10 bis 12 zeigen schematische Seitenansichten und Querschnitte durch erfindungsgemäße Ölabstreifringe mit jeweils zwei Reihen von Durchgangslöchern, die jeweils an einer Lauffläche angeordnet sind.

In den Figuren und der folgenden Beschreibung werden gleiche Bezugszeichen verwendet, um gleiche oder ähnliche Komponenten zu bezeichnen.

In den Figuren wurde die perspektivische Verzerrung der Seitenansicht weggelassen. Die Seitenansicht entspricht damit einem zu einem geraden Streifen gebogenen Kolbenring.

Die Figuren stellen die Erfindung lediglich schematisch dar und zeigen nicht die Verhältnisse der Größen der Öffnungen.

Es wird explizit darauf hingewiesen, dass die Rückseiten der Ölabstreifringe lediglich gerade dargestellt wurden. Es sollte jedoch klar sein, dass die Rückseiten der Ölabstreifringe auch so geformt sein können, dass beispielsweise Schlauchfedern, Expanderfedern und dergleichen verwendet bzw. aufgenommen werden können.

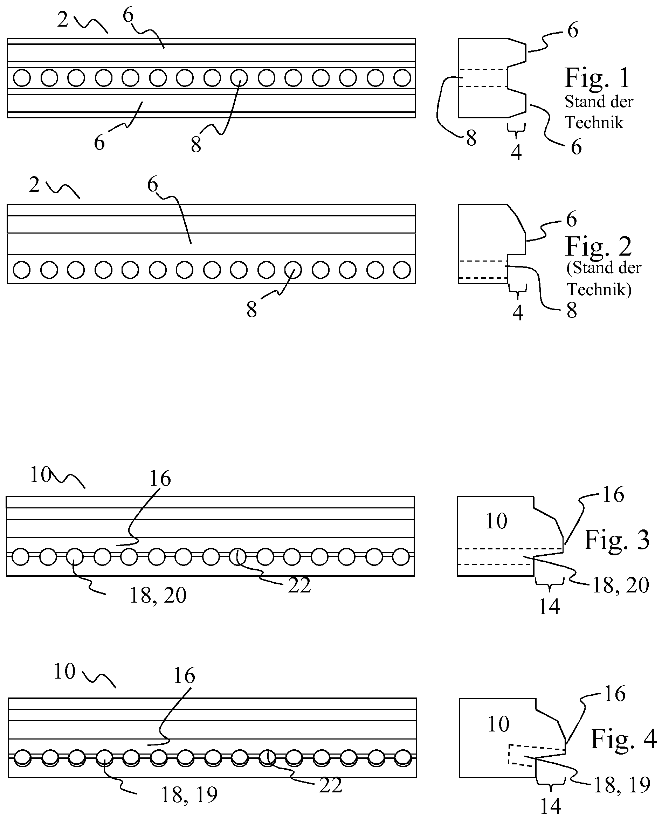

Figur 1 zeigt eine schematische Seitenansicht und einen Querschnitt durch einen herkömmlichen Ölabstreifring 2 mit zwei Stegen bzw. Laufstegen 4, zwischen denen Löcher 8 angeordnet sind. Auf den Laufstegen 4 sind die Laufflächen 6 angeordnet. Der Ölabstreifring 2 von Figur 1 entspricht im Wesentlichen einem herkömmlichen einteiligen Dachfasenring.

Figur 2 zeigt eine schematische Seitenansicht und einen Querschnitt durch einen herkömmlichen Ölabstreifring 2 mit nur einem Laufsteg 4, der an seiner unteren Seite mit Durchgangslöchern 8 versehen ist. Durch den Platzbedarf für die Löcher 8 liegt der Laufsteg 4 und damit die Lauffläche 6 nahe der Mitte des Ölabstreifrings 2. Der Laufsteg 4 ist nur oben angefast, was eine bessere Öl-Abstreifwirkung bei einer Abwärtsbewegung bewirkt.

Figuren 3 und 4 zeigen schematische Seitenansichten und Querschnitte durch erfindungsgemäße Ölabstreifringe 10 mit jeweils nur einem Laufsteg 16, die an seiner unteren Seite mit Durchgangslöchern 20 versehen sind. Der Ölabstreifring von Figur 3 ist mit Durchgangslöchern 20 versehen, die sich durch die untere Kante der einzigen Lauffläche 16 erstrecken. Wie in Figur 4 zu erkennen ist, verlaufen die Durchgangslöcher 20 durch die Lauffläche 16. Die Lauffläche 16 wird von den Durchgangslöchern 20 durchdrungen, wodurch die Breite der Lauffläche 16 in Axialrichtung im Bereich eines Durchgangslochs 20 gegenüber einem Bereich ohne Durchgangsloch 20 verringert ist.

In Figur 4 sind die Ausnehmungen als Sacklöcher 19 ausgeführt. Im Gegensatz zu Figur 3, bei der Durchgangslöcher 18 verwendet werden, erstrecken sich die Ausführungen 18 der

Figur 4 nicht komplett durch den Kolbenring. Zusätzlich verlaufen die Sacklöcher 19 geneigt, d. h. die Achsen der Sacklöcher liegen bei einem runden Kolbenring im Wesentlichen in einer Kegelfläche. Die geneigten Sacklöcher 19 verlängern den unteren Rand der Lauffläche und können zusätzlich einen spitzen Winkel bereitstellen, der das Öl-Abstreifverhalten in den Durchgangslöchern verbessert.

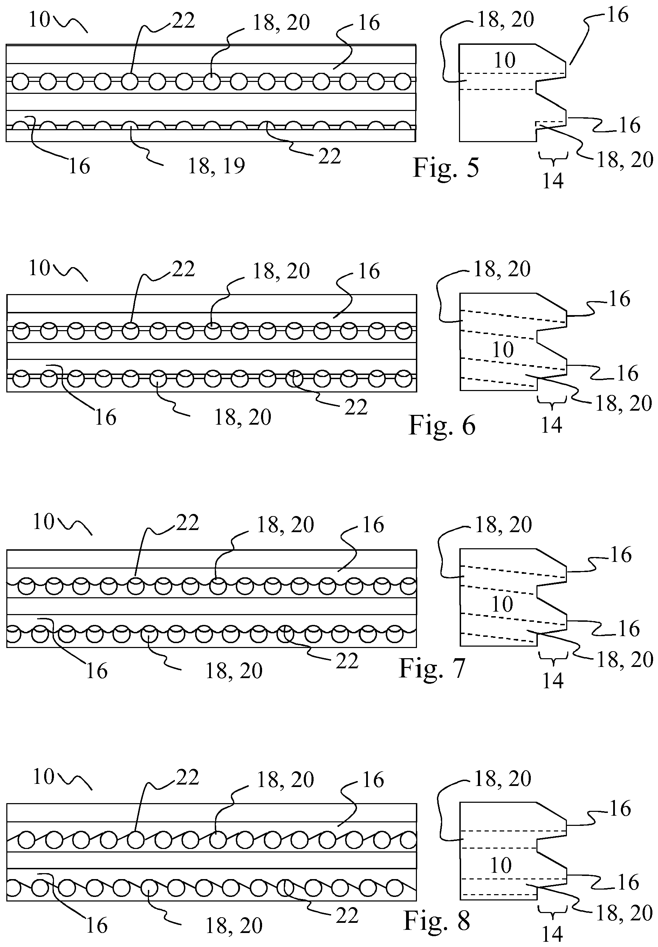

Figuren 5 bis 9 zeigen schematische Seitenansichten und Querschnitte durch erfindungsgemäße Ölabstreifringe mit jeweils zwei Laufstegen 14 und mit Durchgangslöchern 20 an der Unterseite der Laufstege 14. Der Ölabstreifring von Figur 5 entspricht dabei im Wesentlichen einem doppelten Abstreifring von Figur 3, wobei die beiden Laufflächen 16 fast gleich ausgeführt sind. In Figur 5 sind die unteren Ausnehmungen 18 als Sacklöcher 19 ausgeführt, während die oberen Ausnehmungen 18 als Durchgangslöcher 20 ausgebildet sind. Die Sacklöcher 19 erstrecken sich in Figur 5 lediglich mit dem halben Durchmesser im Bereich des Steges. Die Sacklöcher 19 können gebohrt werden, bevor der Steg 4 aus dem Ölabstreifring herausgearbeitet wird. Die Sacklöcher können auch erst gefräst bzw. eingebracht werden, nachdem der Ölabstreifring mit dem Steg 4 versehen wurde. Es ist ebenfalls möglich, dass sich ein Sackloch nur in dem Steg erstreckt und sich nur mit einer Hälfte eines Umfangs tatsächlich in dessen Material erstreckt. Sowohl die Achsen der Sacklöcher 19 als auch die Achsen der Durchgangslöcher 20 liegen jeweils in einer Ebene.

Figur 6 entspricht im Wesentlichen der Ausführungsform von Figur 5 mit dem Unterschied, dass die Durchgangslöcher 20 jeweils auf einer Kegelfläche liegen.

Figur 7 entspricht im Wesentlichen der Ausführungsform von Figur 6, wobei die Kante der Lauffläche zwischen den Aussparungen abgerundet ist. Durch die abgerundete Form kann verhindert werden, dass ein sich twistender Ring zu Riefen in einer Zylinderoberfläche führen kann, da es in dieser Ausführungsform keine scharfen Ecken gibt, die eine Riefenbildung begünstigen. Wie in Figur 6 liegen auch in Figur 7 die Durchgangslöcher 20 jeweils auf einer Kegelfläche. Zusätzlich sind in Figur 7 die Durchgangslöcher 20 einer unteren Lauffläche 16 gegenüber den Durchgangslöchern 20 einer oberen Lauffläche 16 versetzt.

Figur 8 entspricht im Wesentlichen der Ausführungsform von Figur 6, wobei die Kante der Laufflächen 16 zwischen den Aussparungen schräg verläuft. Die untere Kante der Laufflächen 16 verläuft zwischen den Aussparungen somit nicht parallel zu der gerade dargestellten oberen Kante der Laufflächen 16. In dieser Ausführungsform kann die Kante zwischen den Aussparungen wie ein schräges Räumschild arbeiten, das Öl in die nächste Aussparung schiebt. In Figur 8 schieben die unteren Kanten der unteren Lauffläche 16 zwischen den Aussparungen einen Ölfilm jeweils nach links. In Figur 8 schieben die unteren Kanten der oberen Lauffläche 16 zwischen den Aussparungen einen Ölfilm jeweils nach rechts.

Wenn alle Kanten der Lauffläche zwischen den Aussparungen eine gleiche Schräge nach rechts (bzw. nach links) aufweisen, kann damit eventuell eine Rotation des Ölabstreifrings in der Ölabstreifring-Nut begünstigt werden. In Figur 8 liegen die Durchgangslöcher 20 einer Lauffläche jeweils in einer Ebene.

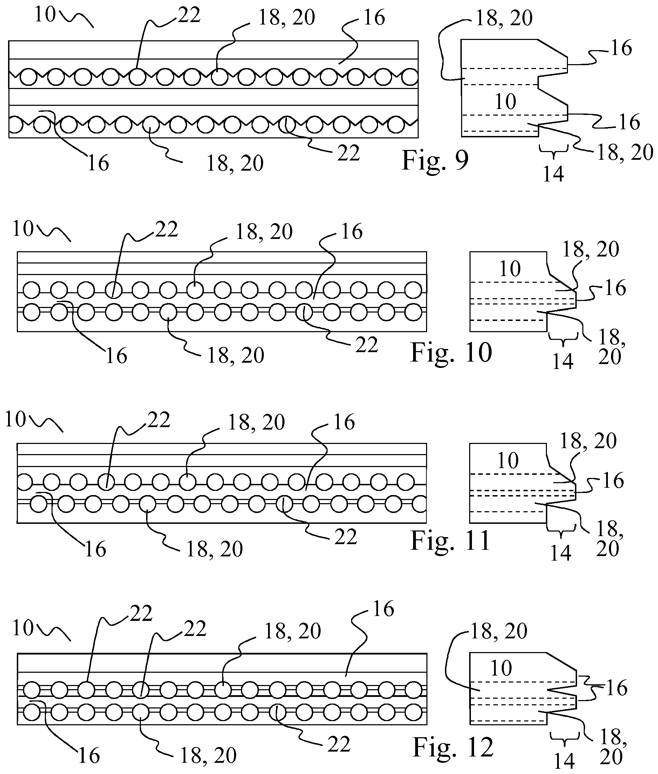

Figur 9 entspricht im Wesentlichen der Ausführungsform von Figur 6, wobei die untere Kante der Laufflächen 16 jeweils zwischen den Aussparungen einen Bug, ähnlich einem Schiffsbug, bildet. Die untere Kante der Laufflächen 16 kann somit einen Ölfilm teilen und ähnlich den Bugwellen eines Schiffs den Ölfilm in Richtung der Aussparungen 18 bzw. Durchgangslöcher 20 leiten.

In der Figur 9 liegen die Durchgangslöcher 20 einer Lauffläche jeweils in einer Ebene, es ist jedoch klar, dass sie auch auf einer Kegelfläche liegen können, um die Abstreifwirkung der Kreis- bzw. Ellipsenbögen 22 zu verbessern.

Figur 10 stellt einen Ölabstreifring dar, der sowohl bei einer Aufwärtsbewegung als auch bei einer Abwärtsbewegung Öl abstreifen kann. Die jeweiligen Durchgangslöcher sind an der oberen und unteren Kante der Lauffläche 16 angeordnet und schneiden diese. Eine Lauffläche 16 ist so mit zwei Reihen von Durchgangslöchern versehen. In Figur 10 sind die oberen Durchgangslöcher 20 über den unteren mit den unteren Durchgangslöchern 20 angeordnet.

Figur 11 entspricht im Wesentlichen der Ausführungsfonn von Figur 10, wobei in Figur 11 die oberen Durchgangslöcher 20 gegenüber den unteren Durchgangslöchern 20 versetzt angeordnet sind.

Figur 12 entspricht im Wesentlichen der Ausführungsform von Figur 10, wobei der Ölabstreifring in Figur 12 zwei Laufflächen umfasst. In Figur 12 schneiden die oberen Durchgangslöcher 20 beide Laufflächen 16. Analog zu Figur 11 können die oberen Durchgangslöcher 20 gegenüber den unteren Durchgangslöchern 20 versetzt angeordnet sein.

Es ist ebenfalls vorgesehen, dass die Durchgangslöcher 20 in einem Knick verlaufen. Dies kann einfach dadurch umgesetzt werden, indem der Draht, aus dem die Ringe gebogen werden, vor dem Biegen mit Löchern versehen wird. Die Vorteile von schräg verlaufenden Durchgangslöchern 20, die als Öl-Kanäle dienen, liegen auf der Hand. Ein schräg verlaufendes Durchgangsloch kann jedoch einen Twist bzw. ein Verwinden des Ölabstreifrings bewirken. Um eine Verwindung des Ölabstreifrings zu vermeiden, können die Durchgangslöcher 20 mit einem Knick versehen werden. Durch einen Knick im Verlauf der Durchgangslöcher 20 wirken diese nicht mehr wie eine Innen-/Außenfase, die einen positiven oder negativen Twist erzeugen kann.

Es sollte klar sein, dass alle Ausführungen von Ölabstreifringen mit rechteckigen Abstreifstegen versehen sein können. Es sollte ebenfalls klar sein, dass alle Ausführungen von Ölabstreifringen auch als Dachfasenringe ausgeführt sein können. Es sollte weiterhin klar sein, dass alle Ausführungen von Ölabstreifringen mit zwei Abstreifstegen als Gleichfasenringe ausgeführt werden können.

Es sollte zudem klar sein, dass alle Ausführungen von Ölabstreifringen mit Einlauf und Verschleißschutzschichten versehen sein können oder aus nitriertem Stahl ausgeführt sein können.

Es sollte weiterhin klar sein, dass alle Ringe mit Schlauchfedern oder Expanderfedern versehen sein können. Zudem kann die vorliegende Erfindung als einteiliger, zweiteiliger oder dreiteiliger Ölabstreifring ausgeführt werden.

### Bezugszeichenliste:

- 2: herkömmlicher Ölabstreifring
- 4: herkömmliche Laufstege
- 6: herkömmliche Lauffläche
- 8: Löcher
- 10: Ölabstreifring
- 14: erfindungsgemäße Stege, Laufstege, Abstreifstege
- 16: Lauffläche
- 18: Öl-Kanäle / Ausnehmungen
- 19: Sacklöcher
- 20: Durchgangslöcher
- 22: Kreis- oder Ellipsenbögen

## Patentansprüche

1. Ölabstreifring (10) mit
mindestens einem Steg (14) und Öl-Kanälen (18)
wobei der mindestens eine Steg (14) außen jeweils eine Lauffläche (16) aufweist, **dadurch gekennzeichnet, dass** die Öl-Kanäle (18) radial verlaufen, und
dass die radialen Öl-Kanäle (18) mindestens eine Kante der Lauffläche (16) schneiden, wodurch Aussparungen an einem Rand der Lauffläche (16) gebildet sind.

2. Ölabstreifring gemäß Anspruch 1, wobei die Öl-Kanäle (18) Sacklöcher (19) bilden.

3. Ölabstreifring gemäß Anspruch 1 oder 2, wobei die Öl-Kanäle (18) Durchgangslöcher (20) bilden.

4. Ölabstreifring gemäß Anspruch 1, 2 oder 3 wobei die Lauffläche (16) eine Zylinderfläche bildet und die Aussparungen, die Sacklöcher (19) oder die Durchgangslöcher (20) senkrecht zu einer Zylinderachse ausgerichtet sind.

5. Ölabstreifring gemäß Anspruch 1, 2 oder 3, wobei die Lauffläche (16) eine Zylinderfläche bildet und die Aussparungen, die Sacklöcher (19) oder die Durchgangslöcher (20) in einem Winkel zwischen 2° und 40°, bevorzugt zwischen 5° und 30°, und weiter bevorzugt zwischen 7° und 15°, zu der Zylinderachse geneigt sind.

6. Ölabstreifring gemäß einem der vorstehenden Ansprüche, wobei die Öl-Kanäle (18), die Sacklöcher (19) oder die Durchgangslöcher (20) einen kreisförmigen Querschnitt aufweisen und die Aussparungen an dem mindestens einen Rand der Lauffläche (16) Kreis- oder Ellipsenbögen (22) bilden.

7. Ölabstreifring gemäß Anspruch 6, wobei der Steg (4) und damit die Lauffläche (16) des Ölabstreifrings (10) im Wesentlichen in einer Mitte der Höhe des Ölabstreifrings (10) angeordnet sind.

8. Ölabstreitring gemäß Anspruch 6, wobei der Steg (4) und die Lauffläche (16) des Ölabstreifrings (10) im Wesentlichen in einer unteren Hälfte der Höhe des Ölabstreifrings (10) angeordnet sind.

9. Ölabstreifring gemäß einem der vorstehenden Ansprüche, wobei die Aussparungen nur an einer unteren Kante der Lauffläche (16) angeordnet sind.

10. Ölabstreifring gemäß einem der vorstehenden Ansprüche 1 bis 8, wobei die Aussparungen sowohl an einer oberen Kante als auch an einer unteren Kante der Lauffläche (16) angeordnet sind.

11. Ölabstreifring gemäß Anspruch 10, wobei die Aussparungen an der oberen Kante der Laufflächen (16) gegenüber den Aussparungen an der unteren Kante der Lauffläche (16) versetzt zueinander angeordnet sind.

12. Ölabstreifring gemäß einem der vorstehenden Ansprüche, wobei der Ölabstreifring (10) mindestens eine erste und eine zweite Lauffläche (16) aufweist, die voneinander getrennt um den Ölabstreifring (10) verlaufen,
wobei nur die erste Lauffläche (16) mit den Aussparungen versehen ist.

13. Ölabstreifring gemäß einem der vorstehenden Ansprüche, wobei der Ölabstreifring (10) mindestens einen ersten und einen zweiten Steg (4) mit jeweils einer ersten und einer zweiten Lauffläche (16) aufweist, die voneinander getrennt um den Ölabstreifring (10) verlaufen,
wobei sowohl die erste als auch die zweite Lauffläche (16) mit den Aussparungen versehen ist, und wobei
bevorzugt die Aussparungen der ersten Lauffläche (16) als Sacklöcher ausgeführt sind und bevorzugt die Aussparungen der zweiten Lauffläche (16) als Durchgangslöcher (20) ausgeführt sind.

14. Ölabstreifring gemäß Anspruch 10, wobei die Aussparungen der ersten Lauffläche (16) gegenüber den entsprechenden Aussparungen der zweiten Lauffläche (16) versetzt sind.

15. Ölabstreifring gemäß einem der vorstehenden Ansprüche, wobei die Kante der Lauffläche (16) zwischen den Aussparungen jeweils abgerundet ist, schräg verläuft oder einen Bug bildet.

## Claims

1. An oil scraper ring (10) comprising
at least one web (14) and oil channels (18),
wherein the at least one web (14) in each case has a running surface (16) on the outside,
**characterized in that** the oil channels (18) run radially, and
that the radial oil channels (18) intersect at least one edge of the running surface (16), wherein recesses are formed on a rim of the running surface (16).

2. The oil scraper ring according to claim 1, wherein the oil channels (18) form blind holes (19).

3. The oil scraper ring according to claim 1 or 2, wherein the oil channels (18) form through holes (20).

4. The oil scraper ring according to claim 1, 2 or 3, wherein the running surface (16) forms a cylinder surface, and the recesses, the blind holes (19) or the through holes (20) are oriented perpendicular to a cylinder axis.

5. The oil scraper ring according to claim 1, 2 or 3, wherein the running surface (16) forms a cylinder surface, and the recesses, the blind holes (19) or the through holes (20) are inclined relative to the cylinder axis at an angle of between 2° and 40°, preferably of between 5° and 30°, and more preferably between 7° and 15°.

6. The oil scraper ring according to one of the preceding claims, wherein the oil channels (18), the blind holes (19) or the through holes (20) have a circular cross section and the recesses form circular or elliptical arcs (22) on the at least one rim of the running surface (16).

7. The oil scraper ring according to claim 6, wherein the web (4) and thus the running surface (16) of the oil scraper ring (10) are arranged substantially in a center of the height of the oil scraper ring (10).

8. The oil scraper ring according to claim 6, wherein the web (4) and the running surface (16) of the oil scraper ring (10) are arranged substantially in a lower half of the height of the oil scraper ring (10).

9. The oil scraper ring according to one of the preceding claims, wherein the recesses are only arranged on a lower edge of the running surface (16).

10. The oil scraper ring according to one of the preceding claims 1 to 8, wherein the recesses are arranged on an upper edge as well as on a lower edge of the running surface (16).

11. The oil scraper ring according to claim 10, wherein the recesses on the upper edge of the running surface (16) are arranged offset relative to one another with respect to the recesses on the lower edge of the running surface (16).

12. The oil scraper ring according to one of the preceding claims, wherein the oil scraper ring (10) has at least a first and second running surface (16), which run around the oil scraper ring (10) so as to be separated from one another,
wherein only the first running surface (16) is provided with the recesses.

13. The oil scraper ring according to one of the preceding claims, wherein the oil scraper ring (10) has at least a first and a second web (4) in each case comprising a first and a second running surface (16), which run around the oil scraper ring (10) so as to be separated from one another, wherein the first as well as the second running surface (16) is provided with the recesses, and wherein
the recesses of the first running surface (16) are preferably embodied as blind holes and the recesses of the second running surface (16) are preferably embodied as through holes (20).

14. The oil scraper ring according to claim 10, wherein the recesses of the first running surface (16) are offset with respect to the corresponding recesses of the second running surface (16).

15. The oil scraper ring according to one of the preceding claims, wherein the edge of the running surface (16) between the recesses is in each case rounded, runs at an incline or forms a bow.

## Revendications

1. Segment racleur d'huile (1 0) avec au moins une barrette (14) et des conduits d'huile (18),
l'au moins une barrette (14) comportant sur l'extérieur chaque fois une surface de roulement (16), **caractérisé en ce que** les conduits d'huile (18) s'écoulent en direction radiale et
**en ce que** les conduits d'huile (18) radiaux recoupent au moins une arête de la surface de roulement (16), suite à quoi des évidements sont formés sur un bord de la surface de roulement (16).

2. Segment racleur d'huile selon la revendication 1, les conduits d'huiles (18) formant des trous borgnes (19).

3. Segment racleur d'huile selon la revendication 1 ou 2, les conduits d'huile (18) formant des trous traversants (20).

4. Segment racleur d'huile selon la revendication 1, 2 ou 3, la surface de roulement (16) formant une surface cylindrique et les évidements, les trous borgnes (19) ou les trous traversants (20) étant orientés à la perpendiculaire d'un axe du cylindre.

5. Segment racleur d'huile selon la revendication 1, 2 ou 3, la surface de roulement (16) formant une surface cylindrique et les évidements, les trous borgnes (19) ou les trous traversants (20) étant inclinés sous un angle compris entre 2° et 40°, de préférence entre 5° et 30°, et de manière plus préférentielle, entre 7° et 15° par rapport à l'axe du cylindre.

6. Segment racleur d'huile selon l'une quelconque des revendications précédentes, les conduits d'huile (18), les trous borgnes (19) ou les trous traversants (20) présentant une section transversale circulaire et les évidements formant sur un bord de la surface de roulement (16) un arc de cercle ou un arc elliptique (22) ,

7. Segment racleur d'huile selon la revendication 6, la barrette (4) et de ce fait la surface de roulement (16) du segment racleur d'huile (10) étant placées sensiblement au centre de la hauteur du segment racleur d'huile (10).

8. Segment racleur d'huile selon la revendication 6, la barrette (4) et la surface de roulement (16) du segment racleur d'huile (10) étant placées sensiblement dans une moitié inférieure de la hauteur du segment racleur d'huile (10).

9. Segment racleur d'huile selon l'une quelconque des revendications précédentes, les évidements n'étant placés que sur une arête inférieure de la surface de roulement (16).

10. Segment racleur d'huile selon l'une quelconque des revendications précédentes 1 à 8, les évidements étant placés aussi bien sur une arête inférieure que sur une arête supérieure de la surface de roulement (16).

11. Segment racleur d'huile selon la revendication 10, les évidements sur l'arête supérieure de la surface de roulement (16) étant placés en étant décalés par rapport aux évidements sur l'arête inférieure de la surface de roulement (16).

12. Segment racleur d'huile selon l'une quelconque des revendications précédentes, le segment racleur d'huile (10) comportant au moins une première et une deuxième surfaces de roulement (16) qui s'écoulent séparément l'une de l'autre autour du segment racleur d'huile (10), seule la première surface de roulement (16) étant munie des évidements.

13. Segment racleur d'huile selon l'une quelconque des revendications précédentes, le segment racleur d'huile (10) comportant au moins une première et une deuxième barrettes (4) avec chacune une première et une deuxième surfaces de roulement (16) qui s'écoulent séparément l'une de l'autre autour du segment racleur d'huile (10),
aussi bien la première qu'également la deuxième surfaces de roulement (16) étant munies des évidements et
de préférence les évidements de la première surface de roulement (16) étant réalisés en tant que trous borgnes et de préférence, les évidements de la deuxième surface de roulement (16) étant réalisés en tant que trous traversants (20).

14. Segment racleur d'huile selon la revendication 10, les évidements de la première surface de roulement (16) étant décalés par rapport aux évidements correspondants de la deuxième surface de roulement (16).

15. Segment racleur d'huile selon l'une quelconque des revendications précédentes, l'arête de la surface de roulement (16) étant respectivement arrondie, s'écoulant en diagonale ou formant un renflement entre les évidements.
